# EUROPÄISCHE PATENTSCHRIFT

(11) **EP 2 453 157 B1**
(45) Veröffentlichungstag und Bekanntmachung des Hinweises auf die Patenterteilung: **05.08.2015**
(21) Anmeldenummer: 11187599.3
(22) Anmeldetag: 03.11.2011
(51) Int. Cl.: F16L 37/14, F16L 47/24, F16K 3/24, F16K 35/02, F24H 9/12

(54) **Verbindungssystem zur Installation eines wasserführenden Gerätes**
Connection system for installation of a water-conveying device
Système de raccord pour l'installation d'un appareil de conduite de l'eau

(30) Priorität: 15.11.2010 DE 102010043932
(43) Veröffentlichungstag der Anmeldung: 16.05.2012
(73) Patentinhaber: BSH Hausgeräte GmbH, 81739 München (DE)
(72) Erfinder: Bauer, Franz, 83374 Traunwalchen (DE); Gruber, Michael, 83362 Surberg (DE); Mayer, Gebhard, 83278 Traunstein (DE)

(56) Entgegenhaltungen:
- EP-A2- 2 154 447
- DE-U1- 9 207 534
- DE-U1-202008 008 856
- DE-U1-202008 009 931
- DE-U1-202009 016 436

## Beschreibung

Die Erfindung betrifft ein Verbindungssystem zur Installation eines wasserführenden Gerätes wie ein Durchlauferhitzer an einen wandseitigen Wasseranschluss nach dem Patentanspruch 1 , mit einem Anschlussstutzen, der einen Fluidkanal hat und einen wasseranschlussseitigen Anschlussbereich und einen geräteseitigen Anschlussbereich aufweist, mit einem wasseranschlussseitigen Adapter zur Verbindung des Wasseranschlusses mit dem wasseranschlussseitigen Anschlussbereich, und mit einem geräteseitigen Adapter zur Verbindung einer internen Verrohrung des Gerätes mit dem geräteseitigen Anschlussbereich. Herkömmlicherweise werden zur Installation von Geräten an einem wandseitigen Wasseranschluss Verbindungssysteme verwendet, die einen Metallstutzen und zwei Metalladapter zur Anbindung des wandseitigen Wasseranschlusses und einer internen Verrohrung des Gerätes aufweisen. Der Wirkeingriff zwischen dem Metallstutzen und den Metalladaptern erfolgt über jeweils eine Verschraubung. Der Metallstutzen und die Metalladapter bestehen meistens aus Messing oder vernickeltem Stahl und sind somit bzgl. der Herstellung und der Materialkosten verhältnismäßig teuer. An der Verschraubung ist aus Montagesicht zudem problematisch, dass es keine definierten Anzugsmomente gibt, da der jeweilige Zustand der Gewindeabschnitte aufgrund Verschmutzungen, beschädigten Gewindeausläufen, usw. stark variiert. Aus fertigungstechnischer Sicht ist neben der Herstellung an sich die Ausbildung der Gewindeabschnitte aufwändig.

In dem deutschen Gebrauchsmuster DE 20 2008 008 856 U1 wird ein alternatives Verbindungssystem zum Verbinden von fluidführenden Rohren und Armaturen gezeigt. Dieses Verbindungssystem schlägt insbesondere zur Kostenreduzierung vor, das eine Rohr aus Kunststoff auszuführen und über eine Steckverbindung mit dem Metallrohr zu verbinden. Die Steckverbindung hat zwei Ringsegmente zur Arretierung des Kunststoffrohrs in dem Metallrohr und einen Haltering zur Sicherung der Ringsegmente. Nachteilig an dieser Steckverbindung ist jedoch die hohe Teilevielfalt und die somit für eine Steckverbindung verhältnismäßig aufwändige Montage, da zwei Ringsegmente und ein Haltering vorgesehen sind.

Das Dokument DE 20 2009 016 436 U1 offenbart ein Verbindungssystem mit einem Anschlussstutzen, einem wasseranschlussseitigen Adapter und einem geräteseitigen Adapter. Der wasseranschlusseitige Adapter ist als Eckstück ausgebildet und weist endseitig einen Schlauchnippel auf. Zu dem Material des Eckstücks finden sich in dem Dokument keine Angaben. Im Gegensatz zum erfindungsgemäßen Adapter weist das Eckstück keinen Gewindeabschnitt mit Außengewinde und keine Schlüsselflächen auf. Ferner weist das Eckstück Zähne auf, die mit Schlitzen im Anschlussstutzen Zusammenwirken.

10 Aufgabe der vorliegenden Erfindung ist es, ein Verbindungssystem zur Installation eines wasserführenden Gerätes an einen wandseitigen Wasseranschluss zu schaffen, das die vorgenannten Nachteile beseitigt und eine vereinfachte Montage erlaubt.

Diese Aufgabe wird gelöst durch ein Verbindungssystem mit den Merkmalen des Patentanspruchs 1. Vorteilhafte Aus- und Weiterbildungen, welche einzeln oder in Kombination miteinander ersetzbar sind, sind Gegenstand der jeweils abhängigen Ansprüche.

Ein erfindungsgemäßes Verbindungssystem zur Installation eines wasserführenden Gerätes an einen wandseitigen Wasseranschluss hat einen Anschlussstutzen, der einen Fluidkanal hat und einen wasseranschlussseitigen Anschlussbereich und einen geräteseitigen Anschlussbereich aufweist. Darüber hinaus hat das Verbindungssystem einen wasseranschlussseitigen Adapter zur Verbindung des Wasseranschlusses mit dem wasseranschlussseitigen Anschlussbereich. Ebenso hat das Verbindungssystem einen geräteseitigen Adapter zur Verbindung einer internen Verrohrung des Gerätes mit dem geräteseitigen Anschlussbereich. Erfindungsgemäß sind der Anschlussstutzen aus Kunststoff und der wasseranschlussseitige Adapter aus Metall, wobei die Anschlussbereiche mit den Adaptern als Steckverbindungen ausgebildet sind, die über jeweils ein Steckelement verriegelt und gesichert werden.

An der erfindungsgemäßen Lösung ist vorteilhaft, dass die Montage der Adapter an den Anschlussstutzen durch die Steckverbindungen ohne Werkzeug erfolgen kann und Fügekräfte durch die Steckverbindung genau definiert werden, wodurch die Montage vereinfacht ist. Die Fügekräfte werden nicht subjektiv vom Montagepersonal definiert, sondern objektiv von den Steckverbindungen. Eine Beschädigung des Anschlussstutzens bzw. der Adapter beim Zusammenbau kann somit nicht erfolgen. Hierdurch ermöglichen die Steckverbindungen die Verwendung eines Kunststoffs als Material für den Anschlussstutzen, da durch diese die Fügekräfte vorgeben werden und somit keine Leckagen im Bereich der Steckverbindungen gebildet werden. Durch die Verwendung eines Kunststoffs als Material für den Anschlussstutzen werden nicht nur die Materialkosten gesenkt, sondern ebenfalls die Herstellung vereinfacht, da dieser nun im Spritzgussverfahren hergestellt werden kann. Zudem entfällt die stutzenseitige Ausbildung von Gewindeabschnitten. Dabei wird aufgrund der Doppelfunktion der Steckelemente als Verriegelungs- und Sicherungsinstrument die Montage zudem vereinfacht, da bei einer Verriegelung der Steckverbindungen gleichzeitig bzw. automatisch eine Sicherung derselben erfolgt. Durch die Verwendung eines Metalls als Material für den wasseranschlussseitigen Adapter kann dieser fest an einer wandseitigen Rohrleitung über eine Schraubverbindung befestigt werden.

Bevorzugterweise sind der Anschlussstutzen und die angebundenen Adapter einzeln relativ zueinander verdrehbar, so dass eine Verdrehung der miteinander zu verbindenden Rohre bzw. Rohrabschnitte nicht erfolgen kann.

Um eine Kippbewegung der Adapter zum Anschlussstutzen zu vermeiden, sind diese über jeweils zumindest zwei radiale Führungen an dem Anschlussstutzen geführt.

Zur Abdichtung des Anschlussstutzens sind vorzugsweise umfangsseitig angeordnete Dichtelemente wie O-Ringe vorgesehen. Bei dieser Anordnung zeigen die Dichtelemente im Vergleich zu Axialdichtungen eine von einer Montage- bzw. Klemmkraft der Steckverbindung unabhängige Dichtwirkung. Zudem können sie durch ihre umfangsseitige Anordnung bei der Montage nicht gequetscht werden. Ferner können sie an den Adaptern bzw. dem Anschlussstutzen vormontiert werden.

Dabei ist zur Vermeidung einer Beschädigung des jeweiligen Dichtelementes im montierten Zustand weiter vorteilhaft, wenn dieses zwischen zwei Führungen angeordnet ist.

Bei einem bevorzugten Ausführungsbeispiel sind die Steckelemente U-förmige Bügel mit zwei Schenkeln und einem Steg, wobei die Schenkel abschnittsweise zur Bügellängsachse zueinander angestellt bzw. mit zumindest jeweils einer Biegung versehen sind. Zur Aufnahme der Steckelemente sind in den Anschlussbereichen Aufnahmen zum Einführen der Steckelemente ausgeführt. Durch die bügelförmige Ausbildung sind die Steckelemente federnd ausgeführt, wobei durch die Biegung der Schenkel ein Herausfallen der Steckelemente aus den Aufnahmen verhindert wird und somit eine Sicherung der Steckverbindungen erfolgt.

Bei einem alternativen Ausführungsbeispiel weist der wasseranschlussseitige Adapter einen Montageabschnitt zum Einsetzen in den Fluidkanal auf und hat zudem eine außenumfangsseitige Ringnut zur Herstellung einer Wirkverbindung mit dem Steckelement. Bei dieser Lösung wird der Adapter in dem Anschlussstutzen geführt, wodurch Führungsflächen des Anschlussstutzens vor Beschädigungen geschützt sind.

Bevorzugterweise ist eine axiale Einbaulage des wasseranschlussseitigen Adapters in dem Anschlussstutzen genau definiert. Hierzu kann der wasseranschlussseitige Anschlussbereich eine Schulterfläche und der wasseranschlussseitige Adapter eine Gegenfläche aufweisen, die in der axialen Einbaulage in Anlage miteinander gebracht sind.

Bei einem Ausführungsbeispiel hat der geräteseitige Adapter einen Montageabschnitt zum Einsetzen in den Fluidkanal mit einem Radialbund zur Herstellung einer Wirkverbindung mit dem Steckelement. Bei dieser Lösung wird der Adapter in dem Anschlussstutzen geführt, wodurch Führungsflächen des Anschlussstutzens vor Beschädigungen geschützt sind.

Zur Zusteuerung des Fluidkanals kann in dem Anschlussstutzen zwischen den Anschlussbereichen ein Absperrventil integriert sein.

Zusätzlich bzw. alternativ kann in dem Anschlussstutzen zwischen den Anschlussbereichen ein Rückschlagventil zur Verhinderung einer Rückströmung integriert sein.

Sonstige vorteilhafte Ausführungsbeispiele der vorliegenden Erfindung sind Gegenstand weiterer Unteransprüche.

Die vorliegende Erfindung eignet sich insbesondere zur schnellen, einfachen und druckdichten Installation eines wasserführenden Gerätes wie ein Durchlauferhitzer, ein Wasserspeicher und drgl. an einen wandseitigen Wasseranschluss.

Im Folgenden werden bevorzugte Ausführungsbeispiele der Erfindung anhand schematischer Darstellungen näher erläutert. Es zeigen:
- Figur 1: einen vertikalen Längsschnitt durch ein erstes, nicht unter die Erfindung fallendes Ausführungsbeispiel eines Verbindungssystems,
- Figur 2: einen horizontalen Schnitt durch das erste Ausführungsbeispiel,
- Figur 3: eine Stirnansicht des ersten Ausführungsbeispiels,
- Figur 4: einen Querschnitt durch das erste Ausführungsbeispiel,
- Figur 5: eine Seitenansicht des ersten Ausführungsbeispiels, und
- Figur 6: einen vertikalen Längsschnitt durch einen Teilbereich eines zweiten Ausführungsbeispiels des erfindungsgemäßen Verbindungssystems.

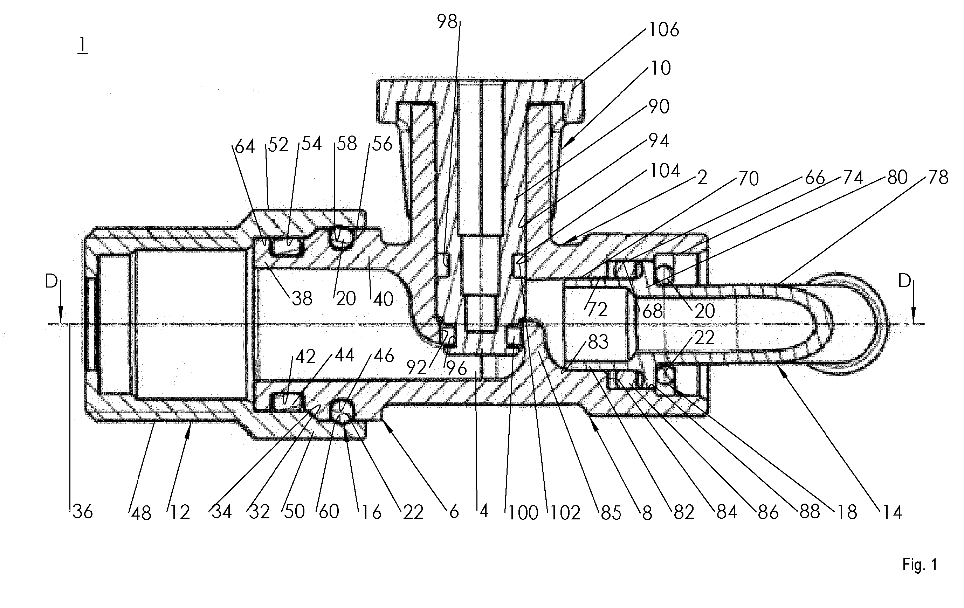

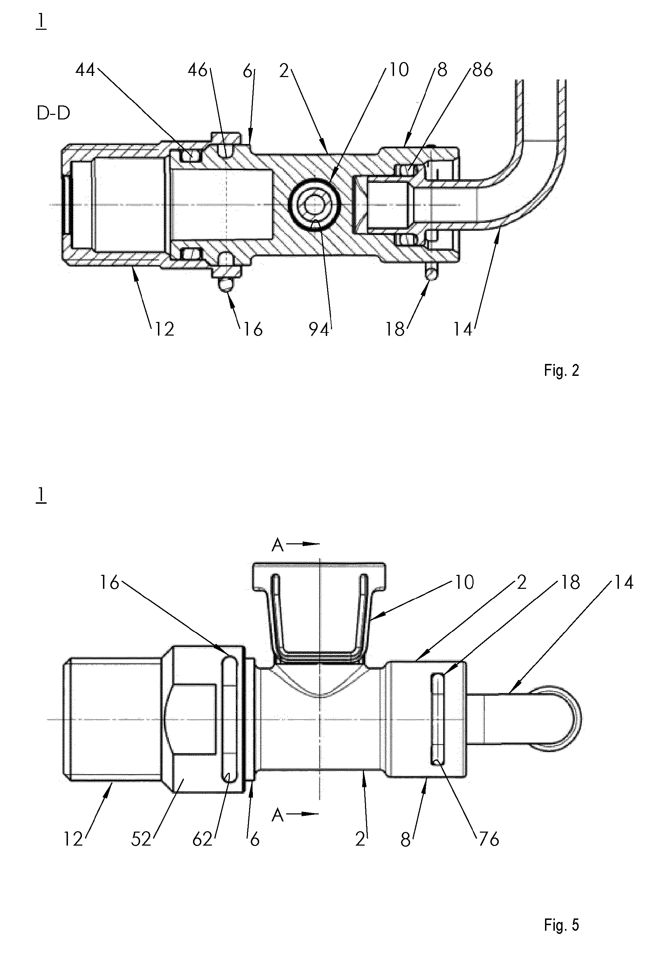

Ein erstes, nicht unter die Erfindung fallendes Ausführungsbeispiel eines Verbindungssystems 1 zur Installation eines elektrischen Gerätes wie ein elektrischer Durchlauferhitzer an einen wandseitigen Wasseranschluss hat gemäß den Figuren 1 und 2 einen Anschlussstutzen 2, mit einem wasseranschlussseitigen Anschlussbereich 6 und einem geräteseitigen Anschlussbereich 8, zwischen dem sich ein Fluidkanal 4 erstreckt.

Der Anschlussstutzen 2 besteht aus einem Kunststoff bzw. ist kunststoffbasiert und vorzugsweise im Spritzgussverfahren hergestellt. Zur Zu- und Aufsteuerung des Fluidkanals 4 ist zwischen den Anschlussbereichen 6, 8 ein Absperrventil 10 in den Anschlussstutzen 2 integriert.

Zur Verbindung des Anschlussstutzens 2 an den wandseitigen Wasseranschluss weist das Verbindungssystem 1 einen wasseranschlussseitigen Adapter 12 auf, der mit dem wasseranschlussseitigen Anschlussbereich 6 zusammenwirkt. Zur Verbindung des Anschlussstutzens 2 mit einer internen Verrohrung des Gerätes weist das Verbindungssystem 1 einen geräteseitigen Adapter 14 auf, der mit dem geräteseitigen Anschlussbereich 8 zusammenwirkt. Die Adapter 12, 14 sind mit den Anschlussbereichen 6, 8 als Steckverbindungen ausgeführt. Die Steckverbindungen werden durch eine axiale Relativverschiebung der Adapter 6, 8 zum Anschlussstutzen 2 hergestellt bzw. gelöst, wobei zur Verriegelung und Sicherung der Steckverbindungen jeweils ein Steckelement 16, 18 vorgesehen ist.

Zum vereinfachten Verständnis wird im Folgenden angenommen, dass der Anschlussstutzen 2 gemäß der Darstellung in Figur 1 von links nach rechts durchströmt wird, also von dem wasseranschlussseitigen Anschlussbereich 6 zum geräteseitigen Anschlussbereich 8. Grundsätzlich kann eine Durchströmung des Anschlussstutzens 1 jedoch auch in Gegenrichtung, also von rechts nach links erfolgen.

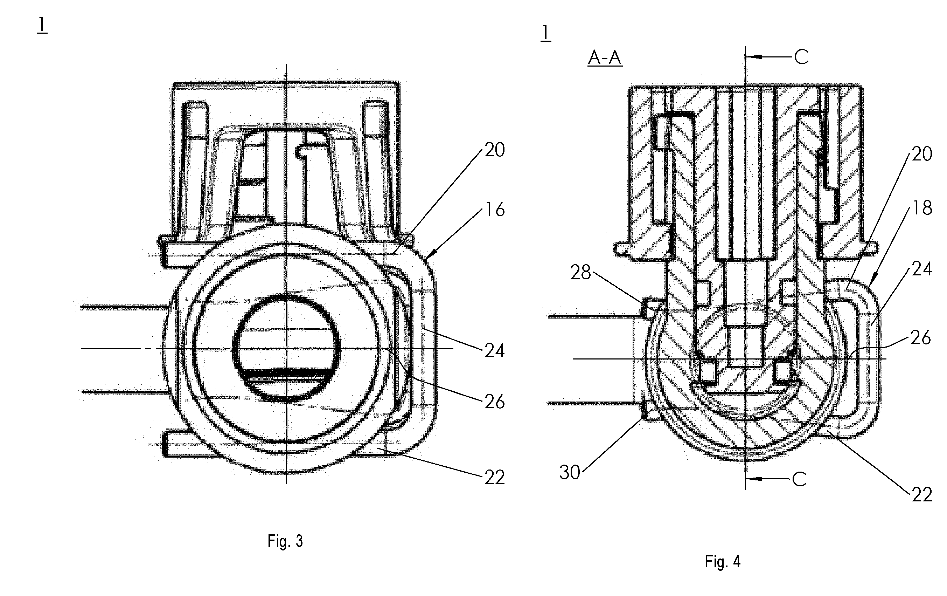

Die Steckelemente 16, 18 sind gemäß den Figuren 3 und 4 als U-förmige Bügel mit zwei Schenkeln 20, 22 und einem die Schenkel 20, 22 miteinander verbindenden Steg 24 ausgebildet. Die Schenkel 20, 22 haben eine derartige Länge, dass sie in ihrer zum Verbindungssystem 1 orthogonalen Montageposition endseitig aus dem Anschlussstutzen 2 heraustreten. Durch ihre bügelartige Ausbildung haben sie eine Federwirkung, wobei die Schenkel 20, 22 zur Sicherung der Steckverbindungen mit jeweils einer Biegung versehen sind. Die Schenkel 20, 22 weisen hierzu bezogen auf ihre Längsachse 26 zwei entsprechend verformte Schenkelabschnitte 28, 30 auf, die bei dem wasseranschlussseitigen Steckelement 16 mittig der Schenkel 20, 22 angeordnet sind (nicht sichtbar). Bei dem geräteseitigen Steckelement 18 gemäß Figur 4 sind die Schenkelabschnitte 28, 30 endseitig ausgebildet.

Wie in Figur 1 gezeigt hat der wasseranschlussseitige Anschlussbereich 6 des Anschlussstutzens 2 zur Definierung einer axialen Einbauposition des wasseranschlussseitigen Adapters 12 eine Schulterfläche 32, die mit einer Gegenfläche 34 des Adapters 12 zusammenwirkt. Die Schulterfläche 32 ist schräg zur Längsachse 36 des Verbindungsystems 1 angestellt und bildet einen außenumfangsseitigen Übergang zwischen einem stromaufwärtigen Dichtabschnitt 38 und einem stromabwärtigen radial erweiterten Sicherungsabschnitt 40. In dem Dichtabschnitt 38 ist eine Ringnut 42 zur Aufnahme eines Dichtrings 44 und in dem Sicherungsabschnitt 40 ist eine Ringnut 46 zur abschnittsweisen Aufnahme der Schenkel 20, 22 des Steckelementes 16 ausgebildet.

Der wasseranschlussseitige Adapter 12 besteht aus einem Metall bzw. einer Metalllegierung wie Messing und hat einen Gewindeabschnitt 48 und einen radial erweiterten Montageabschnitt 50. Der Gewindeabschnitt 48 ist mit einem Außengewinde zum Einschrauben in ein entsprechendes Rohrelement des wandseitigen Wasseranschlusses ausgebildet. Insofern ist der Adapter 12 ein Gewindenippel. Außenumfangsseitig weist der Montageabschnitt 50 eine Vielzahl von Schlüsselflächen 52 zum Ansetzen eines Gabel- bzw. Maulschlüssels auf. Innenumfangsseitig weist der Adapter 12 die Gegenfläche 34 sowie eine sich stromaufwärts der Gegenfläche 34 erstreckende Dichtfläche 54 und eine stromabwärts der Gegenfläche 34 radial zurückgestufte Innenumfangsfläche 56 auf. In der Innenumfangsfläche 56 sind zwei gegenüberliegende rillenartige Vertiefungen 58, 60 zur Aufnahme der Schenkel 20, 22 des Steckelementes 16 ausgebildet, die endseitig jeweils in einen in Figur 5 gezeigten Querschlitz 62 münden, so dass der Adapter 12 von den Schenkeln 20, 22 im Außenumfangsbereich durchsetzt werden kann.

Zur radialen Führung des Adapters 12 auf dem Anschlussbereich 6 hat der Adapter 12 im Bereich seiner Dichtfläche 54 und seiner Innenumfangsfläche 56 jeweils einen Außendurchmesser, der einem Innendurchmesser des Dichtabschnitts 38 und des Sicherungsabschnitts 40 entspricht.

Im verriegelten und gesicherten Zustand liegt der Adapter 12 mit seiner Gegenfläche 34 an der Schulterfläche 32 des Anschlussstutzens 2 an und das Steckelement 16 taucht abschnittsweise mit seinen Schenkeln 20, 22 in die Ringnut 46 und die rillenartigen Vertiefungen 58, 60 ein. Der Dichtring 44 liegt dichtend an der Dichtfläche 54 an und verhindert somit einen Fluidaustritt im Bereich der Steckverbindung. Die axiale Führung erfolgt im Zusammenwirken der Schulterfläche 32 mit der Gegenfläche 34 und des Steckelements 16. Die radiale Führung des Adapters 6 auf dem Anschlussbereich 12 erfolgt über einen freien Flächenabschnitt 64 der Dichtfläche 54 und über die Innenumfangsfläche 56, die sich in Anlage mit dem Dichtabschnitt 38 und dem Sicherungsabschnitt 40 befinden. Dabei werden aufgrund der axialen Beabstandung des Flächenabschnitts 64 von der Innenumfangsfläche 56 zwei axial versetzte radiale Führungen für den Adapter 12 geschaffen, wodurch dieser kippsicher an dem Anschlussstutzen 2 gelagert ist. Die stutzenseitige Ringnut 46 ermöglicht dabei eine Relativverdrehung des Adapters 6 zum Anschlussstutzen 2 um 360° zur Längsachse 36 des Verbindungssystems 1. Der geräteseitige Anschlussbereich 8 hat ausgehend von einem Dichtabschnitt 66 mit einer innenumfangsseitigen Dichtfläche 68 stromaufwärts betrachtet einen innenumfangsseitig radial verjüngten Führungsabschnitt 70 mit einer innenumfangsseitigen Führungsfläche 72 und stromabwärts betrachtet einen innenumfangsseitig radial erweiterten Sicherungsabschnitt 74, in dem zwei gegenüberliegende Querschlitze 76 (vergleiche Figur 5) zur Aufnahme des Steckelementes 18 ausgebildet sind.

Der geräteseitige Adapter 14 ist metallisch und besteht vorzugsweise aus Messing. Er ist bogenförmig ausgebildet und hat gemäß den Figuren 1 und 2 einen Montageabschnitt 78 mit einem Radialbund 80 und einem freien Endabschnitt 82. Zur radialen Führung des Adapters 14 haben der Radialbund 80 und der Endabschnitt 82 jeweils einen Außendurchmesser, der einem Innendurchmesser des Dichtabschnitts 66 und des Führungsabschnitts 70 entspricht. Zur Verbindung des Adapters 14 mit der internen Verrohrung des Gerätes hat der Adapter 14 an seinem vom Montageabschnitt 78 entfernten Endabschnitt einen entsprechenden nicht bezifferten Verbindungsbund.

Im montierten Zustand taucht der Adapter 14 mit seinem Endabschnitt 82 in den Führungsabschnitt 70 sowie mit seinem Radialbund 80 soweit in den Dichtabschnitt 66 ein, bis er mit einem endabschnittseitigen Kantenabschnitt 83 auf einen ventilseitigen

Vorsprung 85 aufläuft, wodurch in Kombination mit dem außenseitig an dem Radialbund 80 anliegenden Steckelementschenkeln 20, 22 der Adapter 14 in axialer Richtung fixiert ist. Dabei wird zwischen dem Radialbund 80 und einer Ringstirnfläche 84 des Führungsabschnitts 70 eine Ringkammer zur Aufnahme eines Dichtrings 86 geschaffen. Der Dichtring 86 umgreift den Endabschnitt 82 und liegt dichtend an der Dichtfläche 68 des Dichtabschnitts 66 an, so dass ein Fluidaustritt im Bereich der Steckverbindung verhindert wird. Gleichzeitig ist der Dichtring 86 in der Ringkammer vor Beschädigungen oder Verschmutzungen geschützt. Die radiale Führung des Adapters 14 erfolgt über den sich in Anlage mit der Führungsfläche 72 befindenden Endabschnitt 82 und über den an einem freien Flächenabschnitt 88 der Dichtfläche 68 anliegenden Radialbund 80. Dabei ist der Radialbund 80 derart in axialer Richtung von der Führungsfläche 72 beanstandet, dass zwei axial versetzte radiale Führungen des Adapters 14 in dem Anschlussbereich 8 geschaffen werden, wodurch Kippbewegungen verhindert werden. Das Steckelement 18 ist durch die Querschlitze 76 des Sicherungsabschnitts 74 geführt und liegt zur lösbaren Verriegelung und axialen Sicherung der Steckverbindung mit seinen Schenkeln 20, 22 an einer von dem Dichtring 86 abgewandten Ringfläche des Radialbundes 80 an, wobei eine Verdrehung des Adapters 14 relativ zum Anschlussstutzen 2 um die Längsachse 36 um 360° ermöglicht wird.

Das Absperrventil 10 weist einen Ventilkörper 90 und einen Ventilsitz 92 auf. Der Ventilkörper 90 ist in einer Querbohrung 94 geführt und über eine Drehbewegung sowie eine Axialverschiebung in Anlage mit dem Ventilsitz 92 bringbar bzw. von diesem beabstandbar. Der Ventilsitz 92 ist quer zur Längsachse 36 des Verbindungssystems 1 und somit in Verschieberichtung des Ventilkörpers 90 orientiert. Der Ventilkörper 90 weist zwei Ringnuten 96, 98 auf, in denen jeweils ein Dichtring 100, 102 eingesetzt ist, und die derart voneinander beabstandet sind, dass in der gezeigten Schließstellung der eine Dichtring 100 an dem Ventilsitz 92 anliegt und somit den Fluidkanal 4 zusteuert und der andere Dichtring 102 eine Abströmung des Wassers über die Querbohrung 94 verhindert. Hierzu ist der Dichtring 102 gemäß der Darstellung in Figur 1 oberhalb des Führungsabschnitts 70 angeordnet und liegt dichtend an einer gegenüberliegenden Umfangsfläche 104 der Querbohrung 94 an. Zur Handbetätigung des Absperrventils 10 hat der Ventilkörper 90 einen pilzartigen Kopfabschnitt 106.

Zur Überführung des Ventilkörpers 90 aus seiner gezeigten Schließstellung in eine Öffnungsstellung zur Aufsteuerung des Fluidkanals 4 ist der Ventilkörper 90 um seine Längsachse zu verdrehen und anschließend nach oben zu verschieben bis der Dichtring 100 von dem Ventilsitz 92 beabstandet ist. Zur Sicherung des Ventilkörpers 90 in seiner Öffnungsstellung ist dieser um seine Längsachse im Gegensinn zu verdrehen. Die Überführung des Ventilkörpers 90 aus seiner Öffnungsstellung zurück in seine Schließstellung erfolgt durch entsprechende Gegenbewegungen.

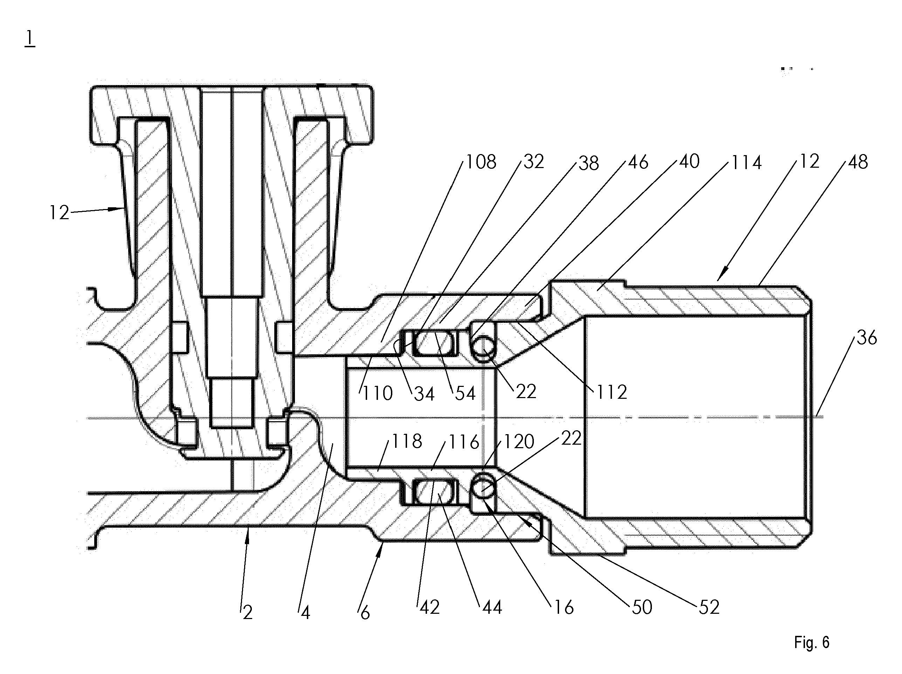

Figur 6 zeigt einen Längsschnitt durch ein zweites Ausführungsbeispiel eines erfindungsgemäßen Verbindungssystems 1 im Bereich seines wasseranschlussseitigen Adapters 6. Im Unterschied zum vorbeschriebenen Ausführungsbeispiel nach den Figuren 1 bis 5 wird dieser wasseranschlussseitige Adapter 6 nicht auf dem Anschlussstutzen 1 geführt, sondern taucht in den Anschlussbereich 8 bzw. in den Fluidkanal 4 ein.

Hierzu weist der kunststoffartige Anschlussstutzen 2 einen wasseranschlussseitigen innenumfangsseitig gestuften Anschlussbereich 6 mit einem Dichtabschnitt 38 mit einer innenumfangsseitigen Dichtfläche 54 auf. Ausgehend von dem Dichtabschnitt 38 weist der Anschlussbereich 12 einen in Strömungsrichtung betrachtet radial verjüngten Führungsabschnitt 108 mit einer innenumfangsseitigen Führungsfläche 110 und einen stromabwärts betrachteten Sicherungsabschnitt 40 mit einer innenumfangsseitigen Führungsfläche 112 auf. Zur Definierung einer axialen Einbaulage des Adapters 12 in dem Anschlussbereich 6 weist der Führungsabschnitt 108 eine Schulterfläche 32 zum Zusammenwirken mit einer entsprechenden Gegenfläche 34 des Adapter 12 auf. Zudem hat der Sicherungsabschnitt 40 zwei in der Darstellung nicht gezeigte gegenüberliegende Querschlitze zur Aufnahme eines bügelartigen Steckelementes 16 zur lösbaren Verriegelung und Sicherung der Steckverbindung.

Der Adapter 12 ist metallisch und hat einen Gewindeabschnitt 48 mit einem Außengewinde zum Einschrauben in einen Rohrabschnitt des wandseitigen Wasseranschlusses sowie einen außenumfangsseitig mehrfach zurückgestuften Montageabschnitt 50 zum Einsetzen in den Fluidkanal 4 bzw. den Anschlussbereich 6. Zwischen dem Gewindeabschnitt 48 und dem Montageabschnitt 50 ist ein Körperabschnitt 114 mit einer Vielzahl von Schlüsselflächen 52 zum Ansetzen eines Gabel- bzw. Mauerschlüssels ausgebildet.

Der Montageabschnitt 50 ist entsprechend dem Anschlussbereich 6 stufenartig ausgebildet, wobei ausgehend von einem mittleren Adapterabschnitt 116 stromabwärts betrachtet ein außenumfangsseitig radial verjüngter Adapterabschnitt 118 und stromaufwärts betrachtet ein außenumfangsseitig radial erweiterter Adapterabschnitt 120 vorgesehen sind. Die Adapterabschnitte 116, 118, 120 weisen jeweils einen Außendurchmesser auf, der einem Innendurchmesser des sie aufnehmenden Anschluss- bzw. Kanalabschnittes 108, 38, 40 entspricht. In dem mittleren Adapterabschnitt 116 ist eine Ringnut 42 zur Aufnahme eines Dichtrings 44 ausgebildet. Zudem weist der mittlere Adapterabschnitt 116 im Übergangsbereich zum verjüngten Adapterabschnitt 118 die Gegenfläche 34 auf. Der erweiterte Adapterabschnitt 120 ist mit einer Ringnut 46 zur Aufnahme der Schenkel 20, 22 des Steckelementes 16 versehen.

Im montierten Zustand wird der Adapter 12 in axialer Richtung von dem Zusammenwirken der Schulterfläche 32 mit der Gegenfläche 34 und durch das Steckelement 16 geführt bzw. fixiert. In radialer Richtung wird der Adapter 12 durch das Anliegen des zurückgestuften Adapterabschnitts 118 und des erweiterten Adapterabschnitts 120 an der Führungsflächen 110, 112 geführt, wobei aufgrund der axiale Beabstandung der Führungsflächen 110, 112 der Adapter 12 kippsicher an dem Anschlussstutzen 2 angebunden ist. Zwischen den Führungsflächen 110, 112 im Bereich des mittleren Adapterabschnitts 116 liegt der Dichtring 44 dichtend an der stutzenseitigen Dichtfläche 54 an. Das Steckelement 16 taucht mit seinen Schenkeln 20, 22 in die Ringnut 46 ein, wodurch neben der lösbaren Verriegelung und Sicherung der Steckverbindung der Adapter 12 relativ zum Anschlussstutzen 2 um 360° um die Längsachse 36 des Anschlussstutzens 2 verschwenkbar ist.

Zur Montage der vorbeschriebenen Verbindungssysteme bzw. zur Installation des Gerätes an einen wandseitigen Wasseranschluss wird zuerst der wasseranschlussseitige Adapter 12 mittels eines Gabel- bzw. Maulschlüssels in einen Rohrabschnitt bzw. einer Muffe des Wasseranschlusses eingeschraubt. Der geräteseitige Adapter 14 ist über seinen Verbindungsbund bereits werkseitig mit der internen Verrohrung des Gerätes bspw. über ein flexibles Schlauchelement verbunden. Dann werden die Adapter 12, 14 an den Anschlussbereichen 6, 8 positioniert, wobei durch die gehäuseseitige Schulterfläche 32 im Zusammenwirken mit der adapterseitigen Gegenfläche 34 der Anschlussstutzen 2 in axialer Richtung genau zum wasseranschlussseitigen Adapter 12 positioniert wird. Abschließend werden die Steckelemente 16, 18 durch die Querschlitze 62, 76 geführt, bis ihre Schenkel 20, 22 endseitig aus den jeweils gegenüberliegenden Querschlitz hinaustreten. Dabei lässt sich der Anschlussstutzen 2 bzw. lassen sich die Adapter 12, 14 aufgrund der relativen Verdrehbarkeit zueinander so positionieren, dass weder der wandseitige Rohrabschnitt noch die interne Verrohrung verdreht wird bzw. werden muss. Zum Lösen bzw. zur Deinstallation des Gerätes von dem wandseitigen Wasseranschluss werden die Steckelemente 16, 18 aus den Querschlitzen 62, 74 herausgezogen und somit die Steckverbindungen zwischen den Adaptern 12, 14 und den Anschlussbereichen 6, 8 entsichert und entriegelt. Das Absperrventil 10 erleichtert dabei insbesondere die Deinstallation des Durchlauferhitzers, da beim Entsichern der wasseranschlussseitigen Steckverbindung das Absperrventil 10 in seiner Schließstellung ein Auslaufen von in der internen Verrohrung befindenden Wassers verhindert. Der Anschlussstutzen 2 kann somit bei der Deinstallation als Verschlusselement für die interne Verrohung wirken.

Offenbart ist ein Verbindungssystem zur Installation eines wasserführenden Gerätes an einen wandseitigen Wasseranschluss, mit einem Anschlussstutzen, der einen Fluidkanal hat und einen wasseranschlussseitigen Anschlussbereich und einen geräteseitigen Anschlussbereich aufweist, mit einem wasseranschlussseitigen Adapter zur Verbindung des Wasseranschlusses mit dem wasseranschlussseitigen Anschlussbereich, und mit einem geräteseitigen Adapter zur Verbindung einer internen Verrohrung des Gerätes mit dem geräteseitigen Anschlussbereich, wobei der Anschlussstutzen aus Kunststoff und der wasseranschlussseitige Adapter aus Metall ist, wobei die Anschlussbereiche mit den Adaptern als Steckverbindungen ausgebildet sind, und wobei zwei Steckelemente zur Verriegelung und Sicherung der Steckverbindungen vorgesehen sind.

### Bezugszeichenliste

- 1: Verbindungssystem
- 2: Anschlussstutzen
- 4: Fluidkanal
- 6: wasseranschlussseitiger Anschlussbereich
- 8: geräteseitiger Anschlussbereich
- 10: Absperrventil
- 12: wasseranschlussseitiger Adapter
- 14: geräteseitiger Adapter
- 16: Steckelement
- 18: Steckelement
- 20: Schenkel
- 22: Schenkel
- 24: Steg
- 26: Längsachse Steckelement
- 28: Schenkelabschnitt
- 30: Schenkelabschnitt
- 32: Schulterfläche
- 34: Gegenfläche
- 36: Längsachse Verbindungssystem
- 38: Dichtabschnitt
- 40: Sicherungsabschnitt
- 42: Ringnut
- 44: Dichtring
- 46: Ringnut
- 48: Gewindeabschnitt
- 50: Montageabschnitt
- 52: Schlüsselfläche
- 54: Dichtfläche
- 56: Innenumfangsfläche
- 58: rillenartige Vertiefung
- 60: rillenartige Vertiefung
- 62: Querschlitz
- 64: Flächenabschnitt
- 66: Dichtabschnitt
- 68: Dichtfläche
- 70: Führungsabschnitt
- 72: Führungsfläche
- 74: Sicherungsabschnitt
- 76: Querschlitz
- 78: Montageabschnitt
- 80: Radialbund
- 82: Endabschnitt
- 83: Kantenabschnitt
- 84: Ringstirnfläche
- 85: Vorsprung
- 86: Dichtring
- 88: Flächenabschnitt
- 90: Ventilkörper
- 92: Ventilsitz
- 94: Querbohrung
- 96: Ringnut
- 98: Ringnut
- 100: Dichtring
- 102: Dichtring
- 104: Umfangsfläche
- 106: Kopfabschnitt
- 108: Führungsabschnitt
- 110: Führungsfläche
- 112: Führungsfläche
- 114: Körperabschnitt
- 116: mittlerer Adapterabschnitt
- 118: zurückgestufter Adapterabschnitt
- 120: erweiterter Adapterabschnitt

## Patentansprüche

1. Verbindungssystem (1) zur Installation eines wasserführenden Gerätes an einen wandseitigen Wasseranschluss, mit einem Anschlussstutzen (2), der einen Fluidkanal (4) hat und einen wasseranschlussseitigen Anschlussbereich (6) und einen geräteseitigen Anschlussbereich (8) aufweist, mit einem wasseranschlussseitigen Adapter (12) zur Verbindung des Wasseranschlusses mit dem wasseranschlussseitigen Anschlussbereich (6), wobei der wasseranschlussseitige Adapter (12) einen Gewindeabschnittt (48) mit einem Außengewinde zum Einschrauben in einen Rohrabschnitt des wandseitigen Wasseranschlusses sowie einen einen außenumfangseitigen mehrfach zurückgestuften Montageabschnitt (50) zum Einsetzen in den Fluidkanal (4) bzw. den Anschlussbereich aufweist, wobei zwischen dem Gewindeabschnitt (48) und dem Montageabschnitt (50) ein Körperabschnitt (114) mit einer Vielzahl von Schlüsselflächen (52) zum Ansetzen eines Gabel- bzw. Maulschlüssels ausgebildet ist, und mit einem geräteseitigen Adapter (14) zur Verbindung einer internen Verrohrung des Gerätes mit dem geräteseitigen Anschlussbereich (8), wobei der Anschlussstutzen (2) aus Kunststoff und der wasseranschlussseitige Adapter (12) aus Metall ist, wobei die Anschlussbereiche (6, 8) mit den Adaptern (12, 14) als Steckverbindungen ausgebildet sind, wobei zwei Steckelemente (16, 18) zur Verriegelung und Sicherung der Steckverbindungen dienen.

2. Verbindungssystem nach Anspruch 1, wobei der Anschlussstutzen (2) und die angebundenen Adapter (12, 14) einzeln relativ zueinander verdrehbar sind.

3. Verbindungssystem nach Anspruch 2, wobei jeweils zumindest zwei radiale Führungen zur Führung der Adapter (12, 14) an dem Anschlussstutzen (2) vorgesehen sind.

4. Verbindungssystem nach Anspruch 1, 2 oder 3, wobei umfangsseitig angeordnete Dichtelemente (44, 86) zur Abdichtung der Steckverbindungen (2) vorgesehen sind.

5. Verbindungssystem nach den Ansprüchen 3 und 4, wobei das jeweilige Dichtelement (44, 86) zwischen den radialen Führungen angeordnet ist.

6. Verbindungssystem nach einem der vorhergehenden Ansprüche, wobei die Steckelemente (16, 18) U-förmige Bügel mit zwei Schenkeln (20, 22) und einem Steg (24) sind und wobei die Schenkel (20, 22) abschnittsweise zur Bügellängsachse (26) zueinander angestellt sind und in den Anschlussbereichen (6, 8) Aufnahmen (58, 60, 62, 76) zum Einführen der Steckelemente (16, 18) ausgeführt sind.

7. Verbindungssystem nach einem der Ansprüche 1 bis 6, wobei der wasseranschlussseitige Adapter (12) einen Montageabschnitt (50) zum Einsetzen in den Fluidkanal (4) aufweist und eine außenumfangsseitige Ringnut (46) zur Herstellung einer Wirkverbindung mit dem Steckelement (16) hat.

8. Verbindungssystem nach Anspruch 7, wobei der wasseranschlussseitige Anschlussbereich (6) eine Schulterfläche (32) und der wasseranschlussseitige Adapter (12) eine Gegenfläche (34) zur Definierung einer axialen Einbaulage aufweisen.

9. Verbindungssystem nach einem der vorhergehenden Ansprüche, wobei der geräteseitige Adapter (14) einen Montageabschnitt (78) zum Einsetzen in den Fluidkanal (4) mit einem Radialbund (80) zur Herstellung einer Wirkverbindung mit dem Sicherungselement (18) hat.

10. Verbindungssystem nach einem der vorhergehenden Ansprüche, wobei in den Anschlussstutzen (2) zwischen den Anschlussbereichen (6, 8) ein Absperrventil (10) zum Auf- und Zusteuern des Fluidkanals (4) integriert ist.

11. Verbindungssystem nach einem der vorhergehenden Ansprüche, wobei in den Anschlussstutzen (2) zwischen den Anschlussbereichen (6, 8) ein Rückschlagventil zur Verhinderung einer Rückströmung integriert ist.

## Claims

1. Connection system (1) for installing a water-bearing device into a water connection on the wall, comprising a connection nozzle (2) having a fluid channel (4) and a connection region (6) on the water connection side and a connection region (8) on the device side, having an adapter (12) on the water connection side for connecting the water connection to the connection region (6) on the water connection side, wherein the adapter (12) on the water connection side comprises a threaded section (48) with an outer thread for screwing into a tube section of the water connection on the wall side and an assembly section (50) stepped-down repeatedly on the outer peripheral side for insertion into the fluid channel (4) or the connection region, wherein a body section (114) having a plurality of spanner flats (42) for attaching an open-ended wrench or combination wrench is embodied between the threaded section (48) and the assembly section (50) and having an adapter (14) on the device side for connecting internal pipe system of the device to the connection region (6) on the device side, wherein the connection nozzle (2) is made of plastic and the adapter (12) on the water connection side is made of metal, wherein the connection regions (6, 8) are embodied with the adapters (12, 14) as plug-in connections, wherein two connection elements (16, 18) are used to lock and secure the plug-in connections.

2. Connection system according to claim 1, wherein the connection nozzle (2) and the attached adapter (12, 14) can be rotated separately relative to one another.

3. Connection system according to claim 2, wherein at least two radial guides are provided in each case to guide the adapter (12, 14) on the connection nozzle (2).

4. Connection system according to claim 1, 2 or 3, wherein sealing elements (44, 86) arranged on the peripheral side are provided to seal the plug-in connections (2).

5. Connection system according to claims 3 and 4, wherein the respective sealing element (44, 86) is arranged between the radial guides.

6. Connection system according to one of the preceding claims, wherein the plug-in elements (16, 18) are U-shaped brackets with two limbs (20, 22) and a web (24), and wherein the limbs (20, 22) are positioned relative to one another in sections with respect to the longitudinal axis of the bracket (26) and receptacles (58, 60, 62, 76) for insertion of the plug-in elements (16, 18) are embodied in the connection regions (6, 8).

7. Connection system according to one of claims 1 to 6, wherein the adapter (12) on the water connection side has an assembly section (50) for insertion into the fluid channel (4) and has an annular groove (46) on the outer peripheral side for establishing an active connection with the plug-in element (16).

8. Connection system according to claim 7, wherein the connection region (6) on the water connection side has a shoulder surface (32) and the adapter (12) on the water connection side has a counter surface (34) for defining an axial installation position.

9. Connection system according to one of the preceding claims, wherein the adapter (14) on the device side has an assembly section (78) for insertion into the fluid channel (4) with a radial collar (80) for establishing an active connection with the securing element (18).

10. Connection system according to one of the preceding claims, wherein a shut-off valve (10) for activating and deactivating the fluid channel (4) is integrated between the connection regions (6, 8).

11. Connection system according to one of the preceding claims, wherein a return valve for preventing a backflow is integrated into the connection nozzles (2) between the connection regions (6, 8).

## Revendications

1. Système de raccord (1) pour l'installation d'un appareil conduisant l'eau sur un branchement d'eau mural, avec une tubulure de raccordement (2) comportant un canal de fluide (4) et présentant une partie de raccordement (6) côté branchement d'eau et une partie de raccordement (8) côté appareil, avec un adaptateur (12) côté branchement d'eau pour le raccordement du branchement d'eau à la partie de raccordement (6) côté branchement d'eau, ledit adaptateur (12) côté branchement d'eau comportant une portion filetée (48) munie d'un filetage extérieur destinée à être vissée dans une partie de tube du branchement d'eau mural ainsi qu'une portion de montage (50) à plusieurs retraits sur le pourtour extérieur destinée à être insérée dans le canal de fluide (4) resp. la partie de raccordement, entre ladite portion filetée (48) et ladite portion de montage (50) étant formée une portion de corps (114) pourvue d'une pluralité de pans (52) pour l'application d'une clé à fourche ou clé plate, et avec un adaptateur (14) côté appareil pour le raccordement d'une tuyauterie interne de l'appareil à la partie de raccordement (8) côté appareil, la tubulure de raccordement (2) étant en matière plastique et l'adaptateur (12) côté branchement d'eau en métal, les parties de raccordement (6, 8) avec les adaptateurs (12, 14) étant réalisées sous forme de raccords à emboîtement, deux éléments emboîtables (16, 18) servant à verrouiller et à sécuriser les raccords à emboîtement.

2. Système de raccord selon la revendication 1, dans lequel la tubulure de raccordement (2) et les adaptateurs (12, 14) attachés peuvent tourner individuellement l'un par rapport à l'autre.

3. Système de raccord selon la revendication 2, dans lequel à chaque fois au moins deux guides radiaux sont prévus pour guider les adaptateurs (12, 14) sur la tubulure de raccordement (2).

4. Système de raccord selon la revendication 1, 2 ou 3, dans lequel des éléments d'étanchéité (44, 86) disposés sur le pourtour sont prévus pour assurer l'étanchéité des raccords à emboîtement (2).

5. Système de raccord selon les revendications 3 et 4, dans lequel l'élément d'étanchéité respectif (44, 86) est disposé entre les guides radiaux.

6. Système de raccord selon l'une des revendications précédentes, dans lequel les éléments emboîtables (16, 18) sont des étriers en U avec deux branches (20, 22) et une traverse (24) et dans lequel les branches (20, 22) sont réglées l'une par rapport à l'autre, par tronçons, par rapport à l'axe longitudinal (26) de l'étrier et dans les parties de raccordement (6, 8), sont réalisés des logements (58, 60, 62, 76) servant à introduire les éléments emboîtables (16, 18).

7. Système de raccord selon l'une des revendications 1 à 6, dans lequel l'adaptateur (12) côté branchement d'eau comporte une portion de montage (50) destinée à être insérée dans le canal de fluide (4) et présente une rainure annulaire (46) sur le pourtour extérieur pour établir une liaison fonctionnelle avec l'élément emboîtable (16).

8. Système de raccord selon la revendication 7, dans lequel la partie de raccordement (6) côté branchement d'eau comporte une surface d'épaulement (32) et l'adaptateur (12) côté branchement d'eau une contre-surface (34) pour définir une position de montage axiale.

9. Système de raccord selon l'une des revendications précédentes, dans lequel l'adaptateur (14) côté appareil comporte une portion de montage (78) destinée à être insérée dans le canal de fluide (4) avec un collet radial (80) pour établir une liaison fonctionnelle avec l'élément de sécurisation (18).

10. Système de raccord selon l'une des revendications précédentes, dans lequel une soupape d'arrêt (10) pour commander l'ouverture et la fermeture du canal de fluide (4) est intégrée dans la tubulure de raccordement (2) entre les parties de raccordement (6, 8).

11. Système de raccord selon l'une des revendications précédentes, dans lequel une soupape de non-retour pour empêcher un reflux est intégrée dans la tubulure de raccordement (2) entre les parties de raccordement (6, 8).
